# EUROPEAN PATENT APPLICATION

(11) **EP 0 801 323 A1**
(43) Date of publication of application: **15.10.1997**
(21) Application number: 97301206.5
(22) Date of filing: 25.02.1997
(51) Int. Cl.: G03B 21/64, G03D 15/10, H04N 1/10

(54) **Improvements in mounting of film transparencies**

(30) Priority: 09.04.1996 GB 9607272
(71) Applicant: CROSFIELD ELECTRONICS LIMITED, Hemel Hempstead Hertfordshire HP2 7RH (GB)
(72) Inventor: de Souza, Glen Michael, Hemel Hempstead, Herts HP2 7RH (GB)
(74) Representative: Skone James, Robert Edmund

(57) **Abstract**

A film transparency holder comprising a transparent flexible envelope (20) having first (21) and second (22) opposing sides. The first side (21) extends at one end of the envelope beyond the second side (22) thereby forming a first flap (26). The second side is connected to the first side along a portion of the length of the second side to form a transparency holding cavity therebetween. The remaining portion of the length of the second side forms a second flap (23). On securing the first flap (21) the second flap (23) can be separated from the first side allowing a transparency (29) to be inserted into the cavity.

Apparatus for use in mounting a transparency comprises a portion (3) for cleaning the transparency and the envelope, a portion (7) for inspecting the transparency, and a portion (14) for sealing the envelope. The apparatus further comprises means (5) for securing the flap of the envelope prior to insertion of the transparency.

## Description

The present invention relates to film transparency holders, for example for use in input scanners such as flat bed scanners. The present invention also relates to methods of mounting a film transparency for use in an input scanner such as a flat bed scanner.

In image scanners using a rotating cylinder where the transparency to be scanned is large enough to handle without a frame, the problems of scratched transparencies are overcome by taping one edge of the transparency to the drum, interposing a few drops of oil between the drum and the transparency and spreading the oil out over this common surface by applying pressure from the taped end, then taping down the free end to hold it in place. The oil is chosen to have the same refractive index as the transparency so that as it lies between the transparency and the cylinder of the scanner the scratches become invisible. With 35mm transparencies there are difficulties in handling which make this approach impractical. In particular, problems arise with flat bed scanners, where the problems of dust and scratches are more pronounced, in which the transparency is contained in a frame for insertion and removal from the scanner. Newtons rings may form where the transparency contacts another surface directly.

EP-B-0415578 describes a film transparency holder comprising a transparent flexible envelope into which a film transparency is inserted in use, the envelope including a pod of liquid, the arrangement being such that the pod ruptures when pressurised to release the liquid, which then spreads between the surfaces of the envelope and the film transparency. The method of loading the transparency into the transparency holder is not described, and difficulties may be experienced in loading the transparency without leaving scratches, finger marks etc. on the transparency and the image area of the transparency holder. In addition, it cannot be guaranteed that the liquid will provide a film of liquid of equal thickness on both sides of the transparency.

In accordance with a first aspect of the invention there is provided a method of mounting a transparency into a transparent flexible envelope for use in an input scanner, the envelope having first and second opposing sides, the first side extending at one end of the envelope beyond the second side thereby forming a first flap, the second side being connected to the first side along a portion of the length of the second side to form a transparency holding cavity therebetween, the remaining portion of the length of the second side forming a second flap, the method comprising securing the first flap of the envelope to a securing point whereby the rest of the envelope is suspended below the securing point and the second flap hangs away from the first side of the envelope, and inserting the transparency into the cavity.

The method according to the first aspect of the invention allows a transparency to be easily mounted into the opening between the second flap and the first side.

In accordance with a second aspect of the invention there is provided a film transparency holder comprising a transparent flexible envelope, the envelope having first and second opposing sides, the first side extending at one end of the envelope beyond the second side thereby forming a first flap, the second side being connected to the first side along a portion of the length of the second side to form a transparency holding cavity therebetween, the remaining portion of the length of the second side forming a second flap, whereby on securing the first flap the second flap can be separated from the first side allowing a transparency to be inserted into the cavity.

Typically the method according to the first aspect of the invention further comprises providing a film of liquid over the transparency within the envelope wherein the liquid has substantially the same refractive index as that of the transparency. The film of liquid is typically provided by pipetting a suitable volume of the liquid at the bottom of the transparency holder on both sides of the transparency, and then rolling the liquid along the length of the transparency to provide a layer of constant thickness on both sides of the transparency.

According to a third aspect of the present invention there is provided apparatus for use in mounting a transparency into an envelope by a method according to the first aspect of the invention the apparatus comprising a mounting unit having a number of portions including;
a portion for cleaning the transparency and the envelope;
a portion for inspecting the transparency after it has been loaded into the envelope; and
a portion for sealing the envelope;
the mounting unit further comprising means for securing the first flap of the envelope prior to insertion of the transparency.

Typically the mean for securing the first flap comprises a clamp.

An embodiment of the present inventions will now be described with reference to the accompanying Figures in which:-
Figure 1 is a perspective view of an oil mounting system which is used for oil mounting a transparency according to the third aspect of the present invention;
Figure 2 is a plan view of a transparency holder according to the second aspect of the present invention;
Figure 3 is a side view of the transparency holder shown in Figure 2;
Figure 4 illustrates a transparency being mounted in a transparency holder of the type shown in Figures 2 and 3;
Figure 5 shows a sealed transparency holder containing a transparency; and,
Figure 6 is a cross-section of the heat sealing area of the mounting system of Figure 1.

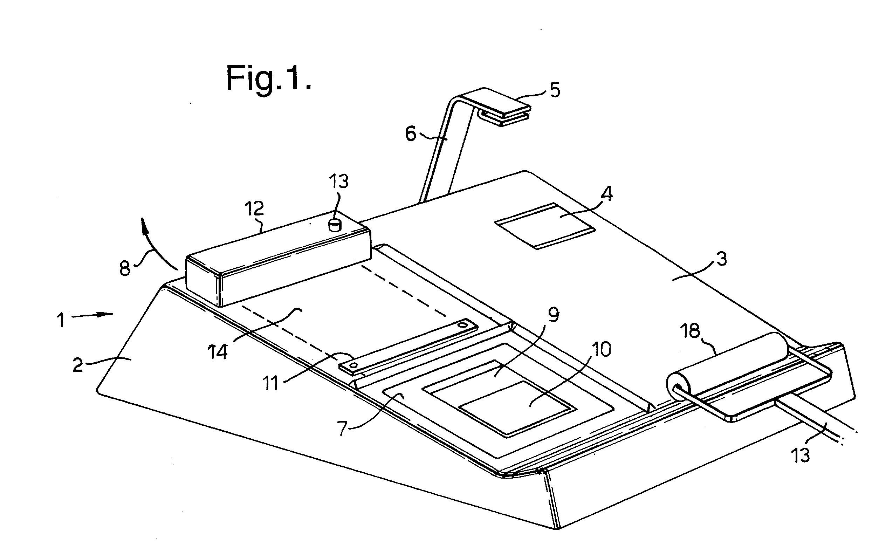

Figure 1 illustrates a system for oil mounting a transparency for a Celsis 360 CCD flatbed image scanner (manufactured by Crosfield Electronics Limited). The system is designed as a single, compact tabletop unit containing all of the features necessary to load a transparency into a transparency holder and surround it with oil. The unit aids the scanner operator (who may be unskilled in the process of oil mounting) in oil mounting certain formats of transparency.

The unit indicated generally at 1 comprises an angled mounting platform 2 which is a self-contained, free standing unit. A cleaning area 3 on the right hand side of the mounting platform is used as a space for cleaning a transparency 4. Clamp 5 mounted on stand 6 is used to mount the transparency into a transparency holder (as described below). An inspection/rolling area in the bottom left hand side of the mounting platform comprises a transparent portion 7 which is lit from below by a light bulb (not shown). The transparent portion 7 supports a transparency holder 9 containing a transparency 10 for inspection. The light bulb may produce a particular colour of light which makes it easier for the operator to detect scratches, finger marks, oil bubbles etc. A heat sealing portion of the mounting platform above the inspection/rolling area comprises an adjustable stop 11 which engages a lower end of a transparency holder to be heat sealed. Heat sealing arm 12 is pivotally mounted on a pivot 13. In a sealing operation, a transparency is placed such that its lower end abuts the stop 11, the heat sealer 12 is pivoted away (as indicated at 8) to allow the transparency holder to be placed flat on the mounting platform at 14, and the heat sealing arm 12 is then pivoted back to the position shown in Figure 1 for heat sealing the transparency holder. Roller 13 is used to spread the oil evenly over the transparency and remove excess oil and bubbles as described below. The roll 18 is made of a suitable soft material that will not damage the transparency.

The unit 1 may also include a simple large format magnification system (not shown) which can be used to pick out fine details.

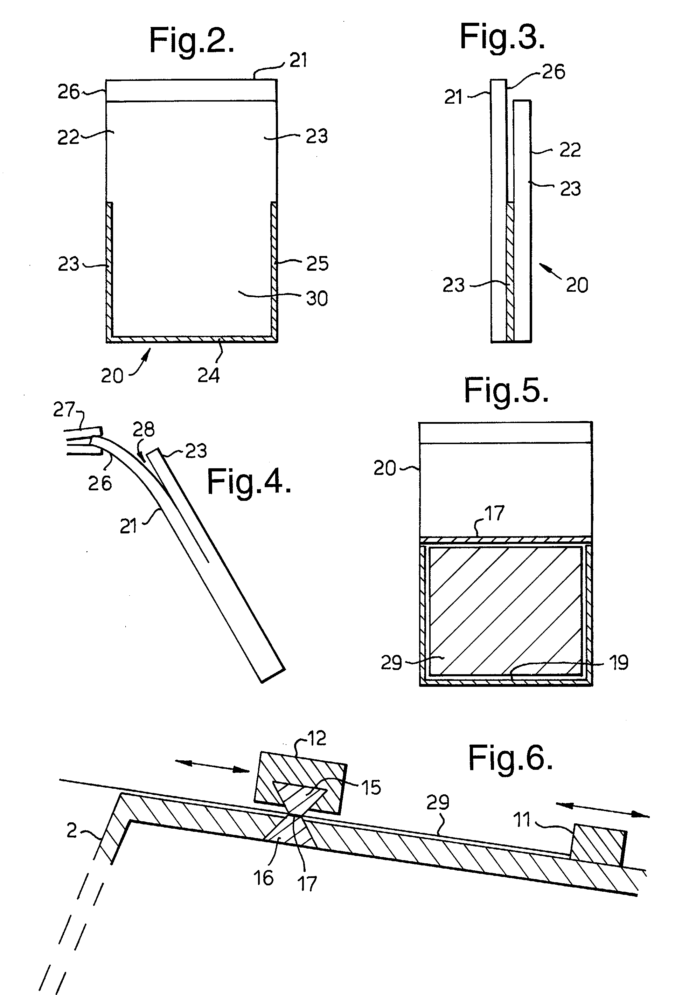

Figure 2 is a plan view and Figure 3 a side view of a transparency holder according to the present invention. The holder comprises an envelope or sachet 20 having opposing first and second sides 21 and 22 respectively. The two sides 21,22 comprise 50 micron thick film sheets which are heat sealed on three sides as indicated at 23-25. The sheets are preferably made from a polyester material such as Mylar D, manufactured by Du Pont.

The envelope formed thereby comprises a first flap 26 formed by the extending portion of the first side 21 and a second flap 23 formed by the portion of the second side 22 which is above the heat sealed sides 23,25.

The holder 20 can be handled in the area of the flaps 21,23, thus ensuring that finger marks are kept off the image area 30 (which houses the transparency in use). On clamping the first flap 26 in a clamp 27 as shown in Figure 4, the second flap 23 falls away from the first side 21 to provide an opening 28 for receiving a transparency.

A mounted sealed transparency 29 is shown in Figure 5. The envelope can be appropriately dimensioned to house 35mm, 6 x 4.5cm or 6 x 7cm transparencies.

A typical oil mounting procedure will now be described, with reference to Figures 1, 2, 5 and 6.
1) Wipe mounting platform 2 with lint free tissues to remove dust and residues of oil.
2) Clean transparency 29 with cleaning fluid to remove fingerprints or residue oil. Clean transparency 29 with anti-static brush/portable vacuum to remove dust.
3) Take out transparency holder 20 (of the correct size for the particular transparency being mounted) from transparency holder package, being careful to only handle the flaps 26 or 23. Clamp the first flap 26 in clamp 5. Close transparency holder package.
4) Using a set of tweezers insert the clean transparency 29 into the transparency holder 20, ensuring the transparency is pushed right to the end of the holder.
5) Using a pipette, apply the required volume of paraffin oil to the bottom 19 of the transparency holder 20 on both sides of the transparency 29, ensuring that oil is applied equally on both sides.
6) Let the transparency holder 20 hang vertically until the oil has levelled out - this may take in the region of 15 seconds. Remove the transparency holder 20 from the clamp 5.
7) Lay the transparency holder 20 flat on the oil mounting area 7, with the open end of the transparency holder facing away from the user.
8) Using the roller 13, slowly roll upwards along the length of the transparency holder 20 to remove excess oil and air bubbles. Oil collects under second flap 23. Place transparency holder 20 on transparent portion 7 and check for any air bubbles using backlight.
9) Move the stop 11 in the sealing area to the required height, open the sealing arm 12, lay the transparency holder 20 on the sealing area against the stop 11, check to see that no part of the transparency 29 overlaps the heating element. The heat sealing area is shown in cross-section in Figure 6, in the process of sealing the transparency holder 29. The heat sealing arm has a heating element 15. A lower heating element 16 is mounted in the table 2. With the arm 12 in its closed position as shown, the transparency 29 is gripped between the upper and lower heating elements 15,16 and heat sealed at the position indicated at 17. The adjustable stop 11 is adjusted such that the sealed portion 17 is in the correct position, as indicated in the plan view of the sealed transparency holder shown in Figure 5.
10) Close the sealing arm 12 for five seconds, sealing the transparency 29 along its upper edge. Open the sealing arm 12.
11) Trim the transparency holder with a guillotine or other trimming tool to remove the excess plastic containing the oil.
12) Further clean the transparency holder if necessary from oil or dust.
13) Place the oil mounted transparency 29 in the appropriate input scanner holder.

## Claims

1. A method of mounting a transparency into a transparent flexible envelope for use in an input scanner, the envelope having first and second opposing sides, the first side (21) extending at one end of the envelope beyond the second side (22) thereby forming a first flap (26), the second side being connected to the first side along a portion of the length of the second side to form a transparency holding cavity therebetween, the remaining portion of the length of the second side forming a second flap (23), the method comprising securing the first flap (26) of the envelope to a securing point (27) whereby the rest of the envelope is suspended below the securing point and the second flap (23) hangs away from the first side of the envelope, and inserting the transparency (29) into the cavity.

2. A method according to claim 1 further comprising providing a film of liquid over the transparency within the envelope wherein the liquid has substantially the same refractive index as that of the transparency.

3. Apparatus for use in mounting a transparency into an envelope by a method according to claim 1 or claim 2, the apparatus comprising a mounting unit (1) having a number of portions including;
a portion (3) for cleaning the transparency and the envelope;
a portion (7) for inspecting the transparency after it has been loaded into the envelope; and
a portion (14) for sealing the envelope;
the mounting unit further comprising means (5) for securing the first flap of the envelope prior to insertion of the transparency.

4. A film transparency holder comprising a transparent flexible envelope (20), the envelope having first (21) and second (22) opposing sides, the first side (21) extending at one end of the envelope beyond the second side (22) thereby forming a first flap (26), the second side being connected to the first side along a portion of the length of the second side to form a transparency holding cavity therebetween, the remaining portion of the length of the second side forming a second flap (23), whereby on securing the first flap (21) the second flap (23) can be separated from the first side allowing a transparency (29) to be inserted into the cavity.
